# NEUE EUROPÄISCHE PATENTSCHRIFT

(11) **EP 0 472 605 B2**
(45) Veröffentlichungstag und Bekanntmachung des Hinweises auf die Entscheidung über den Einspruch: **22.01.2003**
(45) Hinweis auf die Patenterteilung: 08.12.1993
(21) Anmeldenummer: 90908157.2
(22) Anmeldetag: 17.05.1990
(51) Int. Cl.: F23G 7/06, B01D 53/34

(54) **ANLAGE UND VERFAHREN ZUR THERMISCHEN ABGASBEHANDLUNG**
INSTALLATION AND PROCESS FOR HEAT TREATMENT OF WASTE GASES
INSTALLATION ET PROCEDE POUR TRAITEMENT THERMIQUE D'EFFLUENTS GAZEUX

(30) Priorität: 17.05.1989 AT 116889
(43) Veröffentlichungstag der Anmeldung: 04.03.1992
(73) Patentinhaber: Schedler, Johannes, Dipl.Ing., A-8010 Graz (AT); Thalhammer, Heimo, Dr., A-8052 Graz (AT)
(72) Erfinder: Kanzler, Walter, Dipl.-Ing., 8010 Graz (AT); Schedler, Johannes, Dipl.-Ing., 8010 Graz (AT); Thalhammer, Heimo, Dr., 8052 Graz (AT)
(74) Vertreter: Haft, von Puttkamer, Berngruber, Czybulka
(86) Internationale Anmeldenummer: AT9000047
(87) Internationale Veröffentlichungsnummer: WO90014560

(56) Entgegenhaltungen:
- EP-A- 0 372 238
- DE-A- 2 938 159
- DE-A- 3 428 537
- DE-A- 3 503 607
- DE-A- 3 632 322
- DE-A- 3 816 466
- DE-C- 2 443 262
- US-A- 3 112 184
- US-A- 3 406 435
- US-A- 3 790 654
- US-A- 3 870 474
- Stahlherm et al.: ERPROBUNG EINES KOKSOFEN-REGENERATORBESATZES MIT HOHER SPEZIFISCHER WÄRMETAUSCHFLÄCHE, in: Glückauf-Forschungsheft 37(1976), Heft 6, S. 2-8, Verlag Glückauf GmbH, Essen
- Synopse 1715; Eigenberger, G. und Nieken, U.: ABLUFTOXIDATION IN MONOLITHKATALYSATOREN MIT PERIODISCHEM WECHSEL DER STRÖMUNGSRICHTUNG, in: Chem.-Ing.-Tech 60(1988), Nr. 12, S. 1070-1071, VCH Verlagsgesellschaft mbH, Weinheim, 1988
- VDI-Wärmeatlas, 4. Auflage, 1984, N1-N2
- VDI-Wärmeatlas, 5. Auflage, 1988, N1-N11, Gb1-Gb6, Lb1-Lb7
- Hansen, H.: WÄRMEÜBERTRAGUNG IM GEGENSTROM UND KREUZSTROM, S. 55-57, 59, 61, 259-260, 262, 265-266, Springer-Verlag, 1976
- DAS RE-THERM SYSTEM, Thermische Abgasverbrennung, Reeco-Stroem A/S, Prospekt der Fa. Steinmüller, S. 1-8, Juni 1988
- STICKOXID-MINDERUNG MIT PLATTEN- UND WABENKATALYSATOREN, Siemens AG, Unternehmensbereich KWU, Erlangen, 1988
- DENOX-KATALYSATOREN FÜR KRAFTWERKE, CHEMOKERAMISCHE BAUSTEINE VON SIEMENS ZUR REDUKTION VON STICKOXIDEN IN RAUCHGASEN, Siemens AG
- Winter, H.: ENERGIE SPAREN MIT THERMISCHER NACHVERBRENNUNG, in: Industrie-Anzeiger, Nr. 17(1984), S. 18-20
- Stobbe, L.K. und Schneider, H.: ENERGIESPARENDE ABLUFTREINIGUNG, SCHADSTOFFENTSORGUNG MIT REGENERATIVER TNV, in: Technische Rundschau 15(1982), S. 25 und 27
- KATALYTISCHE UND THERMISCHE NACHVERBRENNUNG VON ABGASEN, in: CAV, 1988, S. 224
- Nieken, U.: ZUM VERHALTEN VON KATALYTISCHEN FESTBETTREAKTOREN BEI PERIODISCHEM WECHSEL DER STRÖMUNGSRICHTUNG, Diplomarbeit Nr. 367, Institut für chemische Verfahrenstechnik der Universität Stuttgart, 1986

## Beschreibung

Die Erfindung betrifft eine Anlage und ein Verfahren zur thermischen Oxidation von organischen Kollenstoffverbindungen nach dem Oberbegriff des Anspruchs 1 bzw. 6.

Bei der Abgasverbrennung sind oft sehr große Gasmengen mit in Bezug auf den Heizwert sehr geringfügigen Belastungen auf ca. 700 bis 900°C zu erhitzen und wieder abzukühlen.

Die dafür nötigen Wärmetauscher werden als Rekuperatoren (Rohrbündelwärmetauscher oder Plattenwärmetauscher) oder als Regeneratoren ausgeführt.

Regeneratoren wurden bereits als Winderhitzer für Hochöfen vor langer Zeit eingesetzt und werden auch in jüngster Zeit in der Abgasreinigung wieder mit rfolg eingesetzt.

Dabei ist es meist nötig, die Anlagen mit mindestens drei Regeneratoren auszurüsten, um das nach der Abkühlphase im Regenerator verbleibende Rohgas mit Reingas in die Brennkammer zu spülen.

Die einzelnen Regeneratoren werden mit diversen Füllkörpern gefüllt, die den Nachteil haben, daß sie nur geringe Strömungsgeschwindigkeiten erlauben, wenn die Druckverluste gering gehalten werden sollen.

Dadurch ergibt sich ein ungünstiges Verhältnis von Durchmesser zu Höhe, wodurch der thermische Wirkungsgrad schlechter wird. Außerdem kommt es bei der Verbrennung von Stickstoff-Verbindungen, wie z.B. Ammoniak oder Nitrobenzol, zu verstärkter Bildung von Stickoxiden, die beim Einsatz von Regeneratoren als Wärmetauscher in einer nachfolgenden Reduktions-Einheit separat entfernt werden müssen.

Aus der EP-A-365 262 ist es bekannt, sauerstoffältige Abgase von brennbaren Schadstoffen zu befreien, wobei der Abgasstrom in diskontinuierlicher Weise, also mittels zwei Wärmespeichermassen aufweisenden Regeneratoren wechselweise aufgeheizt und abgekühlt wird. Für diesen diskontinuierlichen Wärmetausch und die dortige oxidative Katalyse sind gemäß Beispiel dieser Druckschrift kugelförmige Keramikkörper vorgesehen, und es sind dort allgemein "poröse Schichten" oder "Blöcke" aus Steinen, Keramik oder Metall erwähnt. Ergänzend ist hier festzuhalten, daß auch Raschigkörper, Sattelkörper od.dgl. in Regenerativ-Wärmetausch-Prozessen Einsatz finden.

Häufig ist in den Regeneratoren ein von Kanälen durchzogenes, aus Schamotte-Steinen aufgebautes Gitterwerk als Wärmespeichermasse vorgesehen. In einem solchen Gitterwerk sind zwar die Druckverluste relativ gering, und sie erlauben eine höhere Strömungsgeschwindigkeit der thermisch zu behandelnden Gase, infolge der relativ großen freien Querschnitte für die Strömung und der relativ hohen Querschnitte der Steine selbst ist jedoch der Wärmetausch verzögert, so daß Wirkungsgrade im Bereich von maximal etwa 90% erreichbar sind.

Bekanntgeworden sind weiters aus der EP-A-37 236 in ihrem Bau speziell auf kontinuierlichen Betrieb ausgerichtete, bisher z.B. für Katalysatoren verwendeten, kanaldurchzogenen Prismenkörpern entsprechend gebaute, in ihren Endflächen voneinander getrennt zu haltende zum gegenseitigen raschen, kontinuierlichen Wärmetausch fluider Medien geeignete und dafür bewußt gestaltete Prismenkörper.

Der Erfindung liegt die Aufgabe zugrunde, eine Anlage und ein Verfahren zu schaffen, die bzw. das die Nachteile der bisher bekanntgewordenen Anlagen und Verfahren vermeidet und bei minimalem Abrieb im Falle staubförmiger Partikel im Abgas, bei hoher Raum- und Dimensionsstabilität, weiters bei einfachem Aufbau und leichter Manipulierbarkeit der Einzelelemente der Wärmespeicher hohe Durchsatzgeschwindigkeiten bei geringen Druckverlusten und damit kompakte Baugrößen und sowie hohe Wirkungsgrade beim Wärmetausch selbst erlaubt. Es wurde gefunden, daß Wärmespeichermassen, die mit definierten, in räumlicher Ordnung angeordneten Wabenkörpern aufgebaut sind, für die alternierende Erhitzung und Abkühlung strömender Gase besonders wirkungsvoll sind.

Gegenstand der Erfindung ist somit eine Anlage und ein Verfahren zur thermischen Oxidation von organischen Kohlenstoffverbindungen nach dem Anspruch 1 bzw. 6.

Es sind "Wabenkörper", welche entweder selbst aus einer katalytisch wirksamen Masse aufgebaut sind oder mit einer solchen beladen sind, für die verschiedensten Einsatzgebiete der Abgasbehandlung bekanntgeworden. Dabei stand jedoch der Kontakt zwischen strömendem gasförmigem Medium und Katalysatoroberfläche zum Zwecke einer chemischen Reaktion voll im Vordergrund, und es bildete die Wärmeführung - meist finden exotherme Reaktionen statt - ein Problem, das dieser Technik durchaus Grenzen setzte.

Bekanntgeworden ist weiters eine Verwendung von Wabenkörpern ohne Katalysewirkung als Gasstrom-Gleichrichter, insbesondere in Abgas- und Rauchgasbehandlungs-Anlagen.

Schließlich sind in ihrem Bau speziell auf kontinuierlichen Betrieb in Rekuperator-Anlagen ausgerichtete, den beschriebenen Kanal durchzogenen Prismenkörpern entsprechend gebaute, jedoch in der Gestaltung ihrer Endflächen auf voneinander getrennt zu haltende, kontinuierlich strömende Medien ausgerichtete, zum gegenseitigen kontinuierlichen Wärmetausch fluider Medien geeignete und dafür bewußt umgestaltete und optimierte Prismenkörper aus der EP-A 37236 bekannt geworden.

In völlig neuartiger Weise besteht die Erfindung nun darin, mit solchen in ihrer Grundform an sich bekannten Wabenkörpern äußerst wirkungsvolle Wärmespeicher aufzubauen und damit Regenerator-Anlagen für den eingangs genannten Zweck auszustatten. Besonderer Vorteil des Einsatzes der Prismenkörper als Wärmespeicher ist deren völlig unproblematischer Einbau in die Regeneratortürme, wobei eine hohe mechanische Stabilität des Aufbaus infolge der regelmäßigen Form der Einzelelemente erreicht wird. Das Verhältnis zwischen frei durchströmbaren Querschnitt und dem vom Speicherkörper selbst eingenommenen Volumen ist für eine hohe Wärmeübertragungsrichtung besonders vorteilhaft, die Druckverluste sind auf einfache Weise gering zu halten.

Weiterer Vorteil der neuartigen Anlage ist weiters ihr niedriger Energieverbrauch, da autothermer Betrieb schon bei Schadstoffgehalten oberhalb 0,5 - 1 g/Nm³ erreicht wird. Der Regenerator speichert über 97% der zur Verbrennung erforderlichen Wärme, weniger als 3% verbleiben im Reingas. Daher kann bei Schadstoff-Gehalten von über 2 g/Nm³ die Gewinnung von Energieüberschüssen in Form von Prozeßdampf oder Heißwasser bereits wirtschaftlich sein. Der Heizwert von Konzentrationsspitzen kann im Regenerator gespeichert und gleichmäßig genutzt werden, es ist die Verwendung von flüssigen Abfällen als Zusatzbrennstoff möglich. Die Beheizung kann durch Erdgas, Flüssiggas, schwefelfreie flüssige Brennstoffe oder Elektrizität erfolgen, letztgenannte nur, wenn der Schadstoffgehalt über 1 g/Nm³ liegt.

Die Speichermasse wird durch Extrusion von entsprechenden keramischen Massen, die für die jeweils benötigten Temperaturen geeignet sind, hergestellt, vorzugsweise aus Steingut, Porzellan, Mullit oder anderen Massen, die dem Fachmann geläufig sind.

Wichtig ist die spezifische Oberfläche der Speichermasse der neuen Regeneratoren innerhalb des obengenannten Bereiches.

Die Strömungsgeschwindigkeit in den einzelnen Speicherkörpern wird zwischen 2 und 10 m/s gewählt, wodurch die Druckverluste nicht zu hoch werden. Bei dieser Bau- und Durchströmungsart läßt sich ein guter Wärmeübergang erzielen, sodaß Wirkungsgrade für die Wärmerückgewinnung von etwa 97 - 98 % erzielt werden können, was bedeutet, daß bei einer Rohgastemperatur von 100°C und einer Verbrennungstemperatur von 800°C das Abgas nur 21°C erhitzt werden muß, bzw. daß das Abgas ohne Zufuhr von zusätzlichem Brennstoff verbrennt, wenn nur 1/Nm³ Schadstoff mit einer Verbrennungswärme von etwa 6000 kcal/kg im Abgas enthalten ist

Dadurch daß die Wärmespeichermassen der Regeneratoren unter Bildung einer Schicht bzw. "Lage", mit einer Mehrzahl von mit zumindest einem Teil ihrer Prismenmantelflächen aneinanderliegend angeordneten Speicherkörpern gebildet sind, ist eine besonders hohe mechanische Stabilität der aus den Einzelprismen-Körpern aufgebauten Speichermassen praktisch ohne "Gas- und Wärmetausch-Schlupf" zwischen den Speicherkörpern gewährleistet.

Für eine Senkung der Druckverluste in der Anlage ist vorgesehen, daß die Wärmespeichermassen der Regeneratoren mit mindestens zwei in Richtung des jeweiligen Gasstromes im Abstand voneinander, mit ihren Prismenflächen, insbesondere mit ihren Kanälen, fluchtend angeordneten Speicherkörpern gebildet sind. Bei gleichartigen Einzelspeicherkörpern ist dadurch eine die Druckverluste gering haltende Fluchtung jedes der gasdurchströmbaren Kanäle in übereinander angeordneten Speicherkörpern gesichert.

Mit der bevorzugten Maßnahme, daß die Wärmespeichermassen der Regeneratoren mit Speicherkörpern mit untereinander gleichen, bevorzugt rechteckigen, quadratischen oder gleichmäßig sechseckigen Prismen-Querschnitten gebildet sind, lassen sich die durch die erzielbaren Effekte noch verbessern.

Im Hinblick auf Langlebigkeit auch bei Behandlung von staubhältigen Gasen, wobei ein von der Betriebsdauer im wesentlichen unabhängig zu haltender, geringer Druckverlust gewährleistet ist, weisen die Speicherkörper Kanäle mit den oben genannten hydraulischen Durchmessern von 2 bis 8 mm, auf.

Unter hydraulischem Durchmesser ist der Quotient aus der vierfachen Querschnittsfläche des Kanals durch dessen Umfang zu verstehen.

Für hocheffektiven Wärmetausch bei besonders kompakter Bauweise der Speichermasse und kurze Gaswege in den Regeneratoren sowie für kurze Umschaltzeiten ist es, notwindig, daß die Wärmespeichermassen der Regeneratoren mit Speicherkörpern gebildet sind, deren Kanäle jeweils eine gasdurchströmbare Querschnittsfläche von 3 bis 25 mm², aufweisen.

Insbesondere, wenn für die Oxidation der organischen Substanz im Abgas hohe Temperaturen des zu erhitzenden Abgases erforderlich sind, hat es sich besonders bewährt, wenn die Wärmespeichermassen der Regeneratoren mit Speicherkörpern mit bei 1300 - 1600°C gebrannter Porzellan- oder Mullitmasse gebildet sind.

Die Erfindung ermöglicht bei etwa gleichen Investitionskosten pro m² Austauschfläche wie bei bisher üblichen, mit Füllkörpern gebildeten Speichermassen, bei hoher Langlebigkeit einen hohen Wirkungsgrad bei der Wärmerückgewinnung im Bereich von mindestens 97%.

Anhand der Zeichnung wird die Erfindung näher erläutert Es zeigen Fig.1 schematisch einen erfindungsgemäßen Speicherkörper in Schrägansicht, Fig.2 eine Ansicht einer Prismenendfläche eines für die erfindungsgemäße Anlage vorgesehenen Speicherkörpers mit Beispielen für verschiedene Kanal-Querschnitte und, Fig.3 eine schematische Darstellung einer Anlage, die zur thermischen Abgas- bzw. Abluft-Oxidation gemäß Erfindung vorgesehen ist.

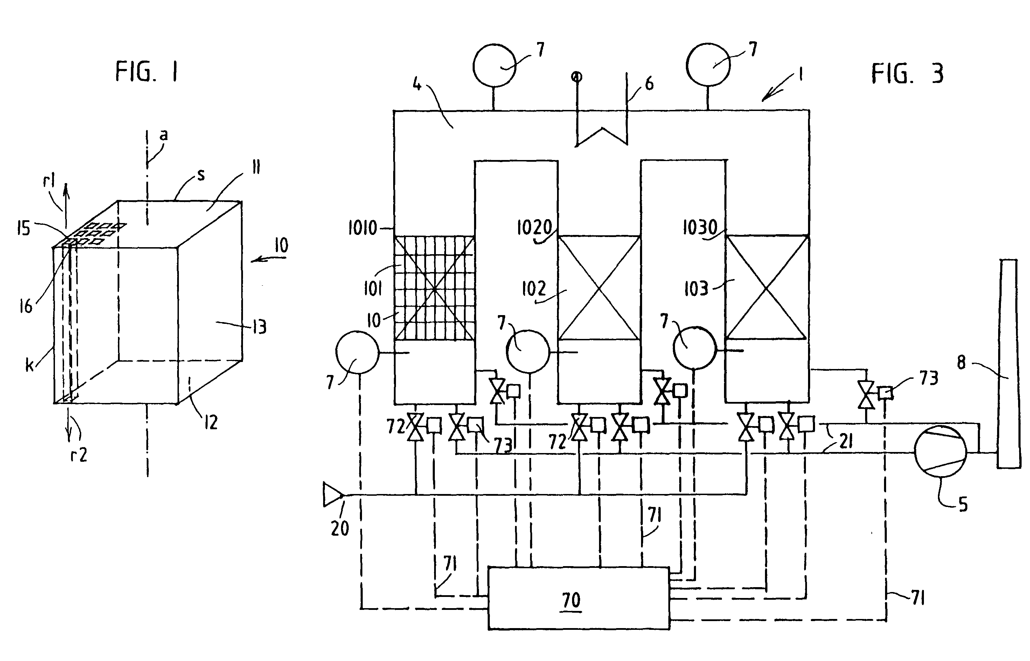

Der in Fig.1 schematisch dargestellte, hier quadratisch-prismatische Speicherkörper 10 mit Prismenmantelfläche 13 mit Kanten der Länge k und den beiden Prismenendflächen 11 und 12 mit Begrenzungsseiten s weist in Gasstromrichtung r1 oder r2 und parallel zur Prismenhauptachse a sich erstreckende Kanäle 15 quadratischen Querschnitts auf. Eine Mehrzahl solcher gleichartiger Speicherkörper 10 können mit ihren Prismenmantelflächen 13 aneinanderliegend Lagen von Speicherkörpern bilden, welche fluchtend, in Mehrzahl übereinander - mit Abstand zueinander - in einem Regenerator angeordnet sind wodurch schließlich eine Speichermasse jeweils gewünschten Gesamtvolumens aufgebaut ist. Das Material der Speicherkörper 10 ist vorteilhaft ein thermostabiles oxidisches keramisches Material mit bevorzugterweise "dichtem" Scherben.

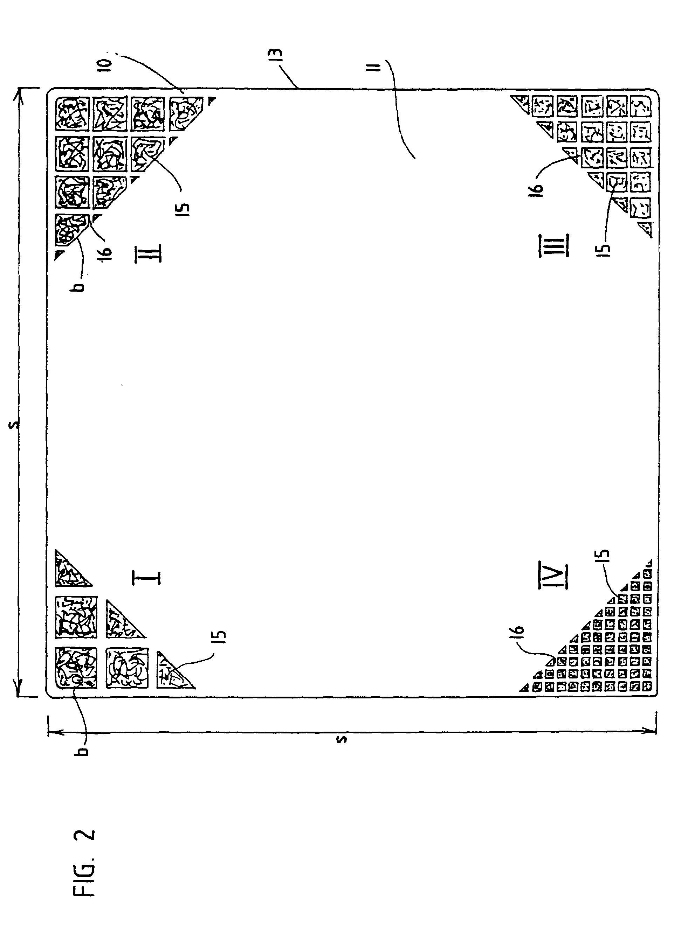

Fig.2 zeigt die Geometrie der erfindungsgemäß zur Wärmeübertragung vorgesehenen wabenartigen quadratisch-prismatischen Speicherkörper 10 anhand einer Ansicht vor deren Prismenendfläche 11. Der Körper weist bei abgerundeten Prismenhauptkanten, von bevorzugt 0,5 m Länge und Prismenendseiten s mit bevorzugt etwa 0,15 m Länge eine Großzahl regelmäßig angeordneter, durchgehender Kanäle 15 mit quadratischer Querschnittsfläche auf, wobei zu Demonstrationszwecken vier Bereiche I - IV mit Kanälen verschiedener Dimensionen, nämlich mit 10, 8, 5 und 2 mm Seitenlänge b, gezeigt sind, wobei der Bereiche I nicht erfindungsgemäß ist.

Besonders bevorzugt, weil hohe Wirkungsgrade bei der Schadstoffbeseitigung auch kleinster Konzentrationsmengen in Abluft oderAbgasen sichernd, sind Kanäle der Dimension und Anordnung gemäß den Bereichen III und IV, wobei bei letzteren die geometrische Oberfläche etwa 800 m²/m³ Speicherkörpermasse beträgt Die Breite der Stege 16 beträgt 0,5 bis 1 mm.

Bei der Anlage zur Verbrennung von Schadstoffen in Abgasströmen gemäß Fig.3 wird mittels Gebläse 5 eine, z.B. mit Aceton, verunreinigte, also nachzubehandelnde Abluft von 20 aus durch die erfindungsgemäße Anlage 1 mit drei verbundenen Regeneratoren 1010,1020,1030 gesaugt. Diese weisen in ihren Innenräumen jeder für sich mit mehreren Lagen von fluchtend übereinander gestapelten Speicherkörpern 10 gebildete Speichermassen 101,102,103 auf. Von den drei Speichermassen befindet sich jeweils eine wechselweise in der Abkühlphase, eine in der Aufheizphase und eine in der Spülphase. In der Abkühlphase wird das kalte Rohgas mit einer vorher aufgeheizten Speichermasse, z.B. 101, z.B. von 60 auf 750°C erhitzt, in der Brennkammer 4 wird der Gasstrom durch die Verbrennungswärme der organischen Substanz weiter erhitzt und kann mit einer Heizung 6 zusätzlich noch nacherhitzt werden. Der heiße Gasstrom gelangt dann in einen in der Aufheizphase befindlichen Regeneratorteil 1020 und wird dort auf 90°C abgekühlt. Der Regeneratorteil 1030 wird während dieser Zeit mit etwa 5 - 10% des Reingasstromes 21 gespült, sodaß bei der Umschaltung des Gasstromes keine unbehandelte Abluft in das Reingas gelangt. Wenn sich die Speichermasse 102 in dem in der Aufheizphase befindlichen Regeneratorteil 1020 so weit aufgeheizt hat, daß das Reingas den Regenerator z.B. mit 95°C verläßt, wird dieser erhitzte Regeneratorteil mit Rohgas beaufschlagt und der gespülte Regeneratorteil 1030 wird aufgeheizt, bis dieser wieder das Reingas nur auf 95°C abkühlt usw. Das gereinigte Abgas verläßt schließlich die Anlage durch einen Kamin 8. Mit dem Symbol 7 sind Temperaturkontroll-Sensoren bezeichnet, die jeweils mit einer zentralen Programmspeicher-Steuereinrichtung 70 verbunden sind, von wo über Steuerleitungen 71 Steuerimpulse zu den einzelnen Stellorganen 73 der Gasstromregelorgane 72 ausgesendet werden.

Die Erfindung wird anhand des folgenden Beispeils näher erläutert:

1000 Nm³/h Abgas, das mit 1 g/Nm³ Aceton beladen ist, wird wie für Fig.3 erläutert, über ein Gebläse durch die Anlage gesaugt. Die Regeneratorteile bestehen aus drei mit erfindungsgemäß vorgesehenen Speicherkörpern gebildeten Speichermassen, von denen jeweils eine wechselweise in der Abkühlphase, eine in der Aufheizphase und eine in der Spülphase ist. In der Abkühlphase wird das kalte Rohgas mit der heißen Speichermasse von 60°C auf 750°C erhitzt, in der Brennkammer wird der Gasstrom durch die Verbrennungswärme des Acetons von 750 auf 775°C und mittels der Heizung von 775°C auf 780°C erhitzt. Der 780°C heiße Gasstrom gelangt dann in den in der Aufheizphase befindlichen Regeneratorteil und wird dort auf 90°C abgekühlt. Der dritte Regeneratorteil wird während dieser Zeit mit ca. 5 - 10% des Reingasstromes gespült, so daß bei der Umschaltung des Gasstromes keine unbehandelte Abluft in das Reingas gelangt. Wenn sich die Speichermasse in dem in der Aufheizphase befindlichen Regeneratorteil so weit aufgeheizt hat, daß das Reingas den Regenerator mit 95°C verläßt, wird der erhitzte Regeneratorteil mit dem Rohgas beaufschlagt und der gespülte Regeneratorteil aufgeheizt, bis dieser wieder das Reingas nur auf 95°C abkühlt usw.

Die Speichermassen sind alle drei gleich ausgeführt und bestehen aus aus je acht Elementen mit 150 x 150 mm Querschnitt und sechs Elementen mit je 300 mm Länge, jeweils in Strömungsrichtung ausgerichtet. Die Geometrie der einzelnen Elemente ist gemäß Fig.1 und 2 ausgeführt, der Abstand der Stege voneinander beträgt 3 mm und die Stegdicke beträgt 1 mm, wodurch sich die geometrische Oberfläche der Elemente mit 800 m²/m³ ergibt. Die Umschaltung der Regeneratoren ergibt sich in der Praxis alle 3 min und der Druckverlust je Regenerator beträgt 20 mbar.

Im gewonnenen gereinigten Abgas konnte Aceton nicht mehr nachgewiesen werden.

## Patentansprüche

1. Anlage zur thermischen Oxidation von organischen Kohlenstoffverbindungen, insbesondere Kohlenwasserstoffen, in Abgas- einschließlich Abluftströmen, gegebenenfalls zur Reinigung von Gasen, mit regenerativer Wärmerückgewinnung, wobei der Abgasstrom wechselweise in mindestens zwei jeweils keramische Wärmespeichermassen (101, 102, 103) aufweisenden Regeneratoren (1010, 1020, 1030) aufgewärmt und abgekühlt wird, **dadurch gekennzeichnet, daß** die Wärmeseeichermasse (101, 102, 103) der Regeneratoren (1010, 1020, 1030) jeweils mit in wesentlichen prismenförmigen, mit der Prismenhauptachse (a) im wesentlichen in Gasströmungsrichtung (r1, r2) angeordneten Wärmespeicherkörpern (10) gebildet ist, deren Inneres jeweils eine Vielzahl von durchgehenden, in beide Prismenendflächen (11, 12) mündenden, zur Prismenhauptachse (a) im wesentlichen parallel und im wesentlichen geradlinig verlaufenden Kanälen (15) mit untereinander im wesentlichen gleichen Kanalquerschnitten aufweist, wobei die Wärmespeichermassen (101, 102, 103) der Regeneratoren mit Wärmespeicherkörpern (10) mit einer spezifischen Oberfläche zwischen 200 und 1.000 m²/m³ gebildet sind, deren Kanäle (15) einen hydraulischen Durchmesser von 2 mm bis 8 mm und jeweils eine gasdurchströmbare Querschnittsfläche von 3 bis 25 mm² aufweisen und deren Stege (16) zwischen den Kanälen (15) eine Breite von 0,5 mm bis 1 mm aufweisen, wobei die Prismenlänge (k) der Speicherkörper 0,2 m bis 0,6 m und deren Prismenendflächen-Seitenlänge (s) 0,1 m bis 0,5 m beträgt, die Wärmespeichermassen (101, 102, 103) durch Extrusion keramischer Massen hergestellt sind und die Wärmespeichermassen (101, 102, 103) unter Bildung von mindestens zwei im Abstand voneinander angeordneten Lagen mit jeweils einer Mehrzahl von mit ihren Prismenmantelflächen (13) aneinanderliegend angeordneten Speicherkörpern (10) gebildet sind, wobei zwei in Richtung des jeweiligen Gasstromes (r1, r2) hintereinander angeordnete Speicherkörper (10) mit ihren Prismenflächen (13), insbesondere mit ihren Kanälen (15), fluchtend im Abstand voneinander angeordnet sind.

2. Anlage nach Anspruch 1, **dadurch gekennzeichnet, daß** die Wärmespeichermassen (101, 102, 103) der Regeneratoren (1010, 1020, 1030) mit Speicherkörpern (10) gebildet sind, deren Kanäle (15) dem Prismenquerschnitt der Speicherkörper (10) geometrisch ähnliche Querschnitte aufweisen.

3. Anlage nach Anspruch 1 oder 2, **dadurch gekennzeichnet, daß** die Wärmespeichermassen (101, 102, 103) der Regeneratoren (1010, 1020, 1030) mit Speicherkörpern (10) mit untereinander gleichen, bevorzugt rechteckigen, quadratischen oder gleichmäßig sechseckigen Prismen-Querschnitten gebildet sind.

4. Anlage nach einem der Ansprüche 1 bis 3, **dadurch gekennzeichnet, daß** die Wärmespeichermassen (101, 102, 103) der Regeneratoren (1010, 1020, 1030) mit Speicherkörpern (10) gebildet sind, deren Kanäle (15) jeweils eine gasdurchströmbare Querschnittsfläche von mindestens 4 mm² aufweisen.

5. Anlage nach einem der Ansprüche 1 bis 4, **dadurch gekennzeichnet, daß** die Wärmespeichermassen (101, 102, 103) der Regeneratoren (1010, 1020, 1030) mit Speicherkörpern (10) mit bei 1.300° C bis 1.600° C gebrannter Porzellan- oder Mullitmasse gebildet sind.

6. Verfahren zur thermischen Oxidation von organischen Kohlenstoffverbindungen, insbesondere Kohlenwasserstoffen in Abgasströmen mit regenerativer Wärmerückgewinnung, wobei der Abgasstrom wechselweise in mindestens zwei Regeneratoren (1010, 1020, 1030) aufgewärmt und wieder abgekühlt wird, wobei der in der aufgeheizten Wärmespeichermasse aufgewärmte Abgasstrom in einer Brennkammer (4) durch die Verbrennungswärme der organischen Kohlenstoffverbindungen weitererhitzt und mit einer Heizung (6) nacherhitzt und der Abgasstrom mittels eines Gebläses (5) durch die Regeneratoren (1010, 1020, 1030) gesaugt wird, **dadurch gekennzeichnet, daß** der Abgasstrom durch eine der in einem der Ansprüche 1 bis 5 genannten Wärmespeichermassen (101, 102, 103) geführt wird.

7. Verwendung der im wesentlichen prismenförmigen, mit der Prismenhauptachse (a) im wesentlichen in Gas-Strömungsrichtung (r1, r2) angeordneten Wärmespeicherkörper (10) der im Anspruch 1 genannten Art zur Bildung von Regenerator-Wärmespeichermassen (101, 102, 103) in Anlagen oder Verfahren zur thermischen Oxidation von organischen Kohlenstoffverbindungen, insbesondere Kohlenwasserstoffen, in Abgasströmen mit regenerativer Wärmerückgewinnung, wobei der Abgasstrom wechselweise in mindestens zwei jeweils die Wärmespeichermassen (101, 102, 103) aufweisenden Regeneratoren (1010, 1020, 1030) aufgewärmt und abgekühlt wird, wobei der in der aufgeheizten Wärmespeichermasse aufgewärmte Abgasstrom in einer Brennkammer (4) durch die Verbrennungswärme der organischen Kohlenstoffverbindungen weiter erhitzt und mit einer Heizung (6) nacherhitzt und der Abgasstrom mittels eines Gebläses (5) durch die Regeneratoren gesaugt wird.

## Claims

1. A plant for the thermal oxidation of organic carbon compounds, in particular hydrocarbons, in waste-gas, including exhaust-air streams, optionally for cleaning gases, with regenerative heat recovery, the waste-gas stream being alternately heated and cooled in at least two regenerators (1010, 1020, 1030) each having heat-accumulator materials (101, 102, 103), **characterized in that** the heat-accumulator materials (101, 102, 103) of the regenerators (1010, 1020, 1030) are formed with at least one essentially prismatic heat-accumulator body (10) which is arranged with the main axis (a) of the prism substantially in the gas flow direction (r1, r2) and the interior of which comprises a plurality of continuous channels (15) opening into the two end faces (11, 12) of the prism and extending substantially parallel to the main axis (a) of the prism and substantially in straight lines and each having substantially the same cross-sections, the heat-accumulator materials (101, 102, 103) of the regenerators being formed with heat-accumulator bodies (10) with a specific surface of between 200 and 1000 m²/m³, the channels (15) of which have an hydraulic diameter of from 2 to 8 mm and each a gas-permeable sectional area of 3 to 25 mm² and the webs (16) of which between the channels (15) have a width of 0,5 mm to 1 mm, the prism length (k) of the accumulator bodies (10) being 0.2 to 0.6 m, and the lateral length (s) of their prism end surfaces 0,1 m to 0,5 m, the heat-accumulator materials (101, 102, 103) being made by extrusion of ceramic masses, and the heat-accumulator materials (101, 102, 103) being formed by a plurality of accumulator materials (101, 102, 103) arranged adjacent to one another with their prismatic surfaces (13), forming at least two layers at a distance from each other, two accumulator bodies (10) being arranged one after the other having their prismatic surfaces (13), in particular their channels (15), in alignment in the direction of the respective gas flow (r1, r2) at a distance from each other.

2. A plant according to Claim 1, **characterized in that** the heat-accumulator materials (101, 102, 103) of the regenerators (1010, 1020, 1030) are formed with accumulator bodies (10), the channels (15) of which have cross-sections geometrically similar to the prism cross-section of the accumulator bodies (10).

3. A plant according to Claims 1 or 2, **characterized in that** the heat-accumulator materials (101, 102, 103) of the regenerators (1010, 1020, 1030) are formed with accumulator bodies (10) with mutually similar prism cross-sections, which are preferably rectangular, square or uniformly hexagonal.

4. A plant according to one of Claims 1 to 3, **characterized in that** the heat-accumulator materials (101, 102, 103) of the regenerators (1010, 1020, 1030) are formed with accumulator bodies (10), the channels (15) of which each have a gas-permeable cross-sectional area of at least 4 mm².

5. A plant according to one of Claims 1 to 4, **characterized in that** the heat-accumulator materials (101, 102, 103) of the regenerators (1010, 1020, 1030) are formed with accumulator bodies (10) with porcelain or mullite material fired at from 1300°C to 1600°C.

6. A process for the thermal oxidation of organic carbon compounds, in particular hydrocarbons, in waste-gas streams with regenerative heat recovery, the waste-gas stream being alternately heated and cooled again in at least two regenerators (1010, 1020, 1030), the waste-gas stream heated by the heated heat-accumulator material being heated further by the combustion heat of the organic carbon compounds in a combustion chamber (4) and being heated additionally by a heating device (6), and the waste-gas stream being sucked through the regenerators (1010, 1020, 1030) by a blower (5), **characterized in that** the waste-gas is conveyed through one of the heat-accumulator materials (101, 102, 103) set out in one of Claims 1 to 5.

7. Use of the heat-accumulator bodies (10) of the type set out in Claim 1 being substantially prismatic and arranged with the main axis (a) of the prism substantially in the direction of the gas stream (r1, r2), in order to form regenerator heat-accumulator materials (101, 102, 103) in plants or processes for the thermal oxidation of organic carbon compounds, in particular hydrocarbons, in waste-gas streams with regenerative heat recovery, the waste-gas stream being alternately heated and cooled in at least two regenerators (1010, 1020, 1030) each having heat-accumulator materials (101, 102, 103), the waste-gas stream heated by the heated heat-accumulator material being heated further by the combustion heat of the organic carbon compounds in a combustion chamber (4) and being heated afterwards by a heating device (6), and the waste gas stream being sucked through the regenerators by a blower (5).

## Revendications

1. Installation destinée à l'oxydation thermique de composés organiques de carbone, en particulier d'hydrocarbures, dans des flux de gaz y compris d'air d'échappement, éventuellement pour l'épuration de gaz, avec récupération régénératrice de chaleur, le flux de gaz d'échappement étant en alternance réchauffé et refroidi dans au moins deux régénérateurs (1010, 1020, 1030) présentant chacun des masses d'accumulation de chaleur (101, 102, 103) céramiques, **caractérisée en ce que** la masse d'accumulation de chaleur (101, 102, 103) respective des régénérateurs (1010, 1020, 1030) est constituée avec des corps accumulateurs (10) sensiblement en forme de prismes, agencés avec l'axe principal du prisme (a) sensiblement dans le sens d'écoulement de gaz (r1, r2), dont l'intérieur respectif présente une multitude de canaux (15) traversants, qui débouchent dans les deux faces d'extrémité (11, 12) du prisme et s'étendent sensiblement parallèles à l'axe principal (a) du prisme et sensiblement rectilignes avec des sections de canaux sensiblement identiques, les masses d'accumulation de chaleur (101, 102, 103) des régénérateurs étant constituées avec des corps accumulateurs de chaleur (10) avec une surface spécifique entre 200 et 1000 m²/m³, dont les canaux (15) présentent un diamètre hydraulique de 2 mm à 8 mm et chacun une superficie en section autorisant le passage du gaz de 3 à 25 mm², et dont les nervures (16) présentent entre les canaux (15) une largeur de 0,5 mm à 1 mm, la longueur (k) du prisme des corps accumulateurs étant de 0,2 m à 0,6 m et dont la longueur latérale de surfaces d'extrémité de prisme (s) est de 0,1 m à 0,5 m, les masses d'accumulation de chaleur (101, 102, 103) étant réalisées par extrusion de masses céramiques et les masses d'accumulation de chaleur (101, 102, 103) étant constituées en formant au moins deux couches agencées à distance l'une de l'autre avec chacune une multitude de corps accumulateurs de chaleur (10) disposés les uns à côté des autres avec leurs surfaces enveloppes (13) du prisme, deux corps accumulateurs (10) disposés l'un derrière l'autre en direction du flux de gaz respectif (r1, r2) étant disposés en alignement à distance l'un de l'autre avec leurs surfaces (13) de prisme, en particulier avec leurs canaux (15).

2. Installation selon la revendication 1, **caractérisée en ce que** les masses d'accumulation de chaleur (101, 102, 103) des régénérateurs (1010, 1020, 1030) sont constitués avec des corps accumulateurs (10) dont les canaux (15) présentent des sections de géométrie similaire à la section de prisme des corps accumulateurs (10).

3. Installation selon la revendication 1 ou 2, **caractérisée en ce que** les masses d'accumulation de chaleur (101, 102, 103) des régénérateurs (1010, 1020, 1030) sont constituées avec des corps accumulateurs (10) qui présentent entre eux les mêmes sections de prisme, de préférence rectangulaires, carrées ou régulièrement hexagonales.

4. Installation selon l'une des revendications 1 à 3, **caractérisé en ce que** les masses d'accumulation de chaleur (101, 102, 103) des régénérateurs (1010, 1020, 1030) sont constituées avec des corps accumulateurs (10) dont les canaux (15) présentent chacun une superficie de section, autorisant le passage de gaz, d'au moins 4 mm².

5. Installation selon l'une des revendications 1 à 4, **caractérisé en ce que** les masses d'accumulation de chaleur (101, 102, 103) des régénérateurs (1010, 1020, 1030) sont constituées avec des corps accumulateurs (10) avec une masse de porcelaine ou de mullite cuite entre 1300°C et 1600°C.

6. Procédé d'oxydation thermique de composés organiques de carbone, en particulier d'hydrocarbures dans des flux de gaz d'échappement avec récupération régénératrice de chaleur, le flux de gaz d'échappement étant en alternance réchauffé et de nouveau refroidi dans au moins deux régénérateurs (1010, 1020, 1030), le flux de gaz d'échappement réchauffé dans la masse d'accumulation de chaleur échauffée continuant d'être chauffé dans une chambre de combustion (4) par la chaleur de combustion des composés d'hydrocarbures organiques et étant chauffé ultérieurement avec un chauffage (6), et le flux de gaz d'échappement étant aspiré au moyen d'une soufflante (5) par les régénérateurs (101, 1020, 1030), **caractérisé en ce que** le flux de gaz d'échappement est guidé à travers une des masses d'accumulation de chaleur (101, 102, 103) indiquées dans l'une des revendications 1 à 5.

7. Utilisation des corps accumulateurs de chaleur (10) sensiblement en forme de prismes, agencés avec l'axe principal de prisme (a) sensiblement dans le sens d'écoulement de gaz (r1, r2), du type indiqué dans la revendication 1, pour former des masses d'accumulation de chaleur (101, 102, 103) de régénérateurs dans des installations ou des procédés d'oxydation thermique de composés de carbone organiques, en particulier d'hydrocarbures, dans des flux de gaz d'échappement avec récupération de chaleur régénératrice, le flux de gaz d'échappement étant en alternance réchauffé et de nouveau refroidi dans au moins deux régénérateurs (1010, 1020, 1030) présentant chacun les masses d'accumulation de chaleur (101, 102, 103), le flux de gaz d'échappement réchauffé dans la masse d'accumulation de chaleur échauffée continuant d'être chauffé dans une chambre de combustion (4) par la chaleur de combustion des composés d'hydrocarbures organiques et étant chauffé ultérieurement avec un chauffage (6), et le flux de gaz d'échappement étant aspiré au moyen d'une souffleuse (5) par les régénérateurs.
